## Europäisches Patentamt

## European Patent Office

## Office européen des brevets

(11) Veröffentlichungsnummer: **0 112 464**
**B2**

(12) **NEUE EUROPÄISCHE PATENTSCHRIFT**

(45) Veröffentlichungstag der neuen Patentschrift: 29.08.90

(21) Anmeldenummer: **83110844.4**

(22) Anmeldetag: **29.10.83**

(51) Int. Cl.⁵: **B 65 G 23/44**

(54) **Spannvorrichtung für Kratzböden o.ä. Transportböden an landwirtschaftlichen Fahzeugen und Maschinen.**

(30) Priorität: **23.12.82 DE 3247625**

(43) Veröffentlichungstag der Anmeldung: **04.07.84 Patentblatt 84/27**

(45) Bekanntmachung des Hinweises auf die Patenterteilung: **19.06.85 Patenblatt 85/25**

(45) Bekanntmachung des Hinweises auf die Entscheidung u¨ber den Einspruch: **29.08.90 Patentblatt 90/35**

(84) Benannte Vertragsstaaten: **AT DE FR GB IT NL**

(56) Entgegenhaltungen: **DE-B-2 237 417 DE-U-7 608 133 US-A-2 612 988**

**IBM TECHNICAL DISCLOSURE BULLETIN, Band 22, Nr. 7, Dezember 1979, Seiten 2641-2642, New York, US S.U. BLASKOVIC u.a.: "Belt tensioning device"**

(73) Patentinhaber: **Maschinenfabriken Bernard Krone GmbH Heinrich-Krone-Strasse 10 D-4441 Spelle (DE)**

(72) Erfinder: **Krone, Bernard Bernard-Krone-Strasse 11 D-4441 Spelle (DE)**
Erfinder: **Kreienbaum, Hubert Südlohner Weg 8 D-4424 Stadtlohn (DE)**

(74) Vertreter: **Busse & Busse Patentanwälte Postfach 1226 Grosshandelsring 6 D-4500 Osnabrück (DE)**

EP 0 112 464 B2

**Beschreibung**

Die Erfindung betrifft eine Spannvorrichtung für Kratzböden o.ä. Transportböden an landwirtschaftlichen Fahrzeugen und Maschinen mit den im Oberbegriff des Patentanspruchs 1 angegebenen Gattungsmerkmalen.

Bei einer bekannten Spannvorrichtung dieser Art (DE—U—76 08 133) ist die versetzbare Umlenkachse als durchgehende. die Umlenkräder tragende Welle ausgeführt, und an beiden Enden federnd und nachstellbar gelagert. Dazu sind von der versetzbaren Umlenkachse weggerichtete Stellschrauben vorgesehen, die in Eingriff stehen mit in Achshalter eingeschweißten Muttern und die durch eine Stirnwand des Fahrgestellrahmens nach außen geführt und von außen verstellbar sind; dabei ist zwischen der Stirnwand und der Stellschraube eine Druckfeder angeordnet, die als eine U-förmig gebogene Blattfeder ausgebildet und mit einem Schenkel an der Stirnwand des Fahrgestellrahmens befestigt ist, während der andere Schenkel an der Stellschraube anliegt und bei deren Anziehen die Kratzerkette spannt.

Infolge der bei dieser bekannten Spannvorrichtung in den Stellweg der Stellschrauben eingebauten Federn ergibt sich für die versetzbare Umlenkachse oder die für ggf. in entsprechender Weise einzeln gelagerten Umlenkräder eine federnd nachgiebige Lagerung relativ zur ortsfest angeordneten und antreibbaren Umlenkachse. Das führt dazu, daß bei einer unter Belastung des Ladeguts erfolgenden Umkehr der Förderrichtung des Kratzbodens, bei der das freie untere Trum der Kratzerketten zum ziehenden Trum und das unter der Last des Ladeguts stehende obere Kettentrum vom gezogenen zum geschobenen Trum wird, an der Spannvorrichtung solche Belastungen auftreten, daß sich die Kratzerkette lockert. Eine solche Umkehr der Bewegungsrichtung des Kratzbodens unter Gutlast kommt aber bei einigen landwirtschaftlichen Fahrzeugen und Maschinen, insbesondere bei einachsigen landwirtschaftlichen Ladewagen und Düngerstreuern, im Betrieb relativ häufig vor, um eine ungünstige Lastverteilung im Fahrzeug auszugleichen. Dem ist die bekannte Spannvorrichtung nicht gewachsen. Es kommt hinzu, daß bei der bekannten Spannvorrichtung der Federweg der in den Stellweg der Stellschrauben eingebauten Federn kleiner ist als der Gesamtspannweg, so daß in gewissen Zeitabständen ein Nachspannen erforderlich ist, wobei jeweils beide Spannvorrichtungen von Hand jeweils für sich gesondert nachgestellt werden müssen.

Bei einer aus der US—A—2,612,988 bekannten Spannvorrichtung für Ketten eines Erntevorsatzes einer landwirtschaftlichen Maschine wird die Spannkraft einer Druckfeder auf eine versetzbare Achse mittels eines Vorschubdruckorgans übertragen, dessen Führungsgehäuse mit einer Blockierrasterplatte versehen ist. In die Rastnuten der Rasterplatte ist eine federbelastete, mit ebenfalls einer Verrastung versehene Blockiersperre in Eingriff zu bringen, wodurch das Vorschuborgan gegen Rückstellbewegungen zu sichern ist. Der zur Rückstellsicherung erforderliche Bauaufwand ist damit erheblich und erfordert verschlei- ßund alterungsanfällige Sicherungsteile. Das Vorschubdruckorgan kann zur Versetzung der Achse nur in der Rasterteilung entsprechenden Abschnitten in eine gegen eine Rückstellbewegung gesicherte Vorschubposition bewegt werden, so daß eine stufen-lose selbsttätige Versetzbarkeit und eine stets wirksame Übertragung der Spannkraft des Spannkrafterzeugers nicht möglich ist.

Die Erfindung hat sich die Aufgabe gestellt, eine Spannvorrichtung zu schaffen, die unempfindlich gegenüber unter Belastung erfolgenden Bewegungsumkehrungen des Kratzbodens ist, sich also auch bei häufigerem Lastwechsel in den Kettentrums nicht lockert, sondern stets mit voller Spannkraft wirksam ist; vorzugsweise soll die Spannvorrichtung außerdem vollautomatisch, d.h. gänzlich nachstellfre arbeiten.

Zur Lösung dieser Aufgabe sieht die Erfindung eine Spannvorrichtung mit den im Patentanspruch 1 angegebenen Merkmalen vor. Weitere Merkmale und Einzelheiten der Erfindung, insbesondere auch hinsichtlich der bevorzugt angestrebten Ausgestaltung, sind in den Ansprüchen 2 bis 7 angegeben.

Der Gegenstand der Erfindung wird nachstehend anhand zweier in der Zeichnung dargestellter Ausführungsbeispiele näher erläutert; in der Zeichnung zeigt.

Fig. 1 eine Unteransicht des vorderen Endes eines landwirtschaftlichen Fahrzeugs mit Kratzboden und erfindungsgemäßer Spannvorrichtung;

Fig. 2 eine Seitenansicht zu Fig. 1, teilweise geschnitten, etwa nach Linie II—II in Fig. 1;

Fig. 3 eine Einzelheit III aus Fig. 1 in vergrößertem Maßstab;

Fig. 4 eine Einzelheit wie Fig. 3 bei einer zweiten Ausführungsform.

Ein am vorderen Ende eine Deichsel 1 ausbildender Fahrgestellrahmen weist einen vorderen Querträger 2 und zwei Seitenträger 3 auf, die durch Querträger 4 verbunden sind. Diese tragen den hier aus einzelnen Holzbrettern bestehenden Fahrzeugboden 5, der außerdem auch noch durch zum Rahmen gehörende Längsträger 6 abgestützt ist. Die vordere Begrenzungskante des Fahrzeugbodens 5 liegt mit einigem Abstand hinter dem vorderen Querträger 2, womit sich zwischen beiden ein Freiraum 7 ergibt. Zur Bildung eines Laderaums oberhalb des Fahrzeugbodens 5 sind auf dem vorderen Querträger 2 und den Seitenträgern 3 Bordwände (nicht dargestellt) angebracht.

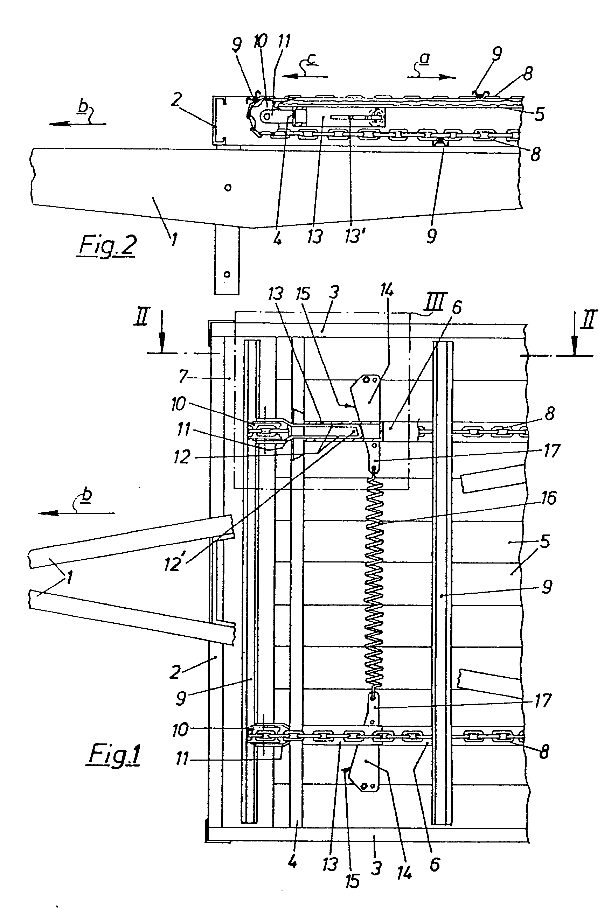

Wie weiter aus Fig. 1 u. 2 ersichtlich, ist der Fahrzeugboden 5 von einer Kratzerkette bedeckt, die aus zwei im Abstand parallel zueinander liegenden, endlosen Gliederketten 8 und an diesen in Querrichtung befestigten Mitnahme- bzw. Kratzleisten 9 besteht. Das obere Trum der Kratzerkette 8, 9 liegt auf dem Boden 5 auf, während das untere Trum mit einigem Abstand unterhalb des Bodens 5 verläuft und, soweit es nicht mit den Leisten 9 in seitlichen Schienen geführt ist, frei nach unten durchhängt. Am hinteren, nicht dargestellten Ende des Fahrgestellrahmens läuft die Kratzerkette 8, 9 mit ihren Gliederketten über Kettenräder, die auf einer im Fahrgestellrahmen ortsfest gelagerten und von der Seite her antreibbaren Welle sitzen. Am vorderen Ende des Fahrgestellrahmens ist die Krat zerkette 8, 9 über frei drehbar gelagerten Ketten rollen bzw. Umlenkräder 10 geführt und umge lenkt. Der so oder ähnlich gebildete und bekannte Kratz- oder Transportboden dient dazu, auf dem Fahrzeugboden befindliches landwirtschaftliches Ladegut zu transportieren, und zwar zumeist in der durch den Pfeil a angedeuteten Förderrichtung, d.h. vom — bezogen auf die mit dem Pfeil b angegebenen Fahrtrichtung — vorderen zum hinteren Ende des Fahrzeugs. Das unter der Last des Ladeguts stehende obere Trum der Kratzerkette 8, 9 ist dabei das gezogene Trum, während das freie untere Trum das geschobene Trum bildet. Durch Antriebsumkehr läßt sich eine entgegengesetzte Förderrichtung, wie durch den Pfeil c angedeutet, erreichen, wie sie zur besseren Lastverteilung des Ladeguts häufig gewünscht und vorgenommen wird. In diesem Fall wird das belastete obere Trum der ese Kratzerkette 8, 9 zum geschobenen und das freie untere Trum zum gezogenen Trum.

Um trotz dieser wechselnden Belastung die Kratzerkette 8, 9 stets gleichmäßig gespannt zu halten und einen unerwünschten Durchgang des unteren Trums zu vermeiden, sieht die Erfindung eine auf die vorderen Kettenrollen bzw. Umlenk- kräder 10 wirkende Spannvorrichtung vor, bei der die von einem Spannkrafterzeuger ausgeübte und die vorderen Umlenkräder 10 mit einer geradlinigen Versatzbewegung weg von der zweiten, ortsfest angeordneten und antreibbaren hinteren Umlenkachse drückende Spannkraft über ein Vor- schubdruckorgan mit Rückstellhemmung übertra- gen wird.

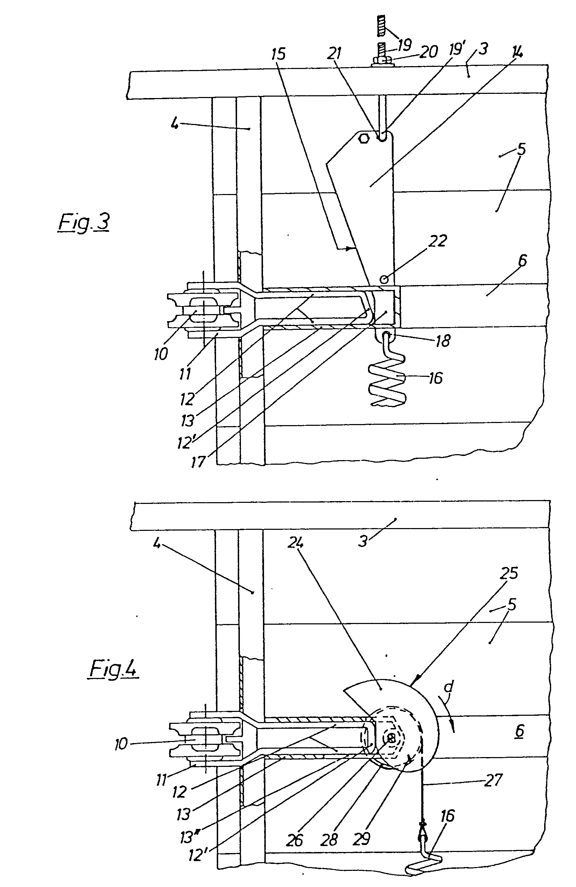

Dazu sind im gezeichneten Ausführungsbeispiel nach Fig. 1 bis 3 die vorderen Umlenkräder 10 mit ihren Achsen in Bügeln 11 gelagert, die ihrerseits mit Führungsschäften 12 in am vorderen Ende der Bodenlängsträger 6 ausgebildeten Führungstaschen 13 gleitverschieblich geführt und gelagert sind. Das Vorschubdruckorgan wird jeweils von einem die Führungstasche 13 am hinteren Ende quar durchsetzenden Keilstück 14 gebildet, das eine mit dem abgeschrägten oder abgerundeten hinteren Ende 12' des Führungs- schaftes 12 zusammenwirkende Selbsthem- mungs-Keilfläche 15 aufweist. Als Spannkrafterzeuger ist eine Schraubenfeder 16 vorgesehen, die sich quer unter dem Fahrzeugboden erstreckt und die beiden in gleicher Ebene und gegensinnig zueinander bewegbar angeordneten Keilstücke 14 mit einer entsprechenden Vorspannung gegeneinander zieht. Zweckmäßig haben dazu die Keilstücke 14 am vorderen, eine Schlitzführung 13' der Taschen 13 durchgreifenden Ende eine geradlinige Nase 17 mit Einhängeöse 18, in die die Enden der Schraubenfeder 1 6jeweils eingehängt sind (Fig. 3).

In Fig. 3 ist auch veranschaulicht, wie sich die Spannvorrichtung zur Montage zweckmäßig handhaben und außer Wirkung bringen läßt. Jedes Keilstück 14 kann mittels einer Montageschraube 19, die den Seitenträger 3 durchgreift und sich außen an diesem mit einer Mutter 20 abstützt und die mit ihrem inneren, zweckmäßig hakenförmigen Ende 19' in eine am äußeren Ende des Keilstücks 14 vorgesehene Öffnung 21 eingehängt ist, soweit zum Seitenträger 3 hin aus der Schlitzführung in der Führungstasche 13 entgegen der Spannkraft der Schraubenfeder 16 nach außen gezogen werden, daß sich nur noch die geradlinige Nase 17 in der Führungstasche 13 befindet, womit der das vordere Umlenkrad 10 lagernde Bügel 11 mit dem Führungsschaft 12 spannungslos gestellt ist. Zur Arretierung des Keilstücks 14 in dieser Stellung ist im Keilstück ein Loch 22 vorgesehen, das einen Stecker aufnimmt, der beim Lockern der Montageschraube 19 an der Außenwand der Führungstasche 13 zur Anlage kommt und damit das Keilstück 14 in der in Fig. 3 dargestellten Position hält. Die Montageschraube 19 kann dann ausgehängt und dazu verwendet werden, das Keilstück 14 auf der anderen Seite des Fahrzeugs ebenfalls aus der Führungstasche 13 bis in die spannungsfreie Endstellung herauszuziehen. Damit läßt sich die Montage der Kratzerkette 8, 9 in üblicher weise und ungehindert durchführen. Durch Herausschlagen der Stecker aus den Löchern 22, gegebenenfalls unter Zuhilfenahme der Montageschraube 19 zur Lockerung bzw. Druckentlastung der Stecker, wird dann die Spannvorrichtung wirksam gemacht, d.h. die von der Schraubenfeder 16 erzeugte Spannkraft zieht die Keilstücke 14 gegensinnig in die Führungstaschen 13 ein, so daß über die selbsthemmenden Keilflächen 15 und die Führungsschäfte 12 auf beide Umlenkräder 10 die zum gleichmäßigen Straffhalten der beiden Trums der Kratzerkette 8, 9 erforderliche und sich selbsttätig nachregulierende Spannkraft übertragen wird. Infolge der Selbsthemmungs-Keilflächen 15 an den Keilstükken 14 ist auch bei wechselnder Belastung der Trums des Kratzförderers 8, 9 ein Lockern der Spannvorrichtung ausgeschlossen.

Das in Fig. 4 dargestellte, abgewandelte Ausführungsbeispiel unterscheidet sich von der Ausführung nach Fig. 1 bis 3 dadurch, daß als Vorschubdruckorgan ein drehbeweglich gelagertes Keilstück 24 mit einer spiralförmigen Selbsthemmungs-Keilfläche 25 vorgesehen ist. Das drehbewegliche Keilstück 24 ist auf einer Achse 26 am Ende der Führungstasche 13 gelagert und durchsetzt mit seiner spiralförmigen Selbsthemmungs-Keilfläche 25 eine entsprechende Schlitzführung oder Ausnehmung 13'' der Führungstasche 13, so daß auch hier ein Zusammenwirken der Keilfläche 25 mit dem hinteren Ende 12' des Führungsschaftes 12 im Sinne einer Spannkraft- Druckbeaufschlagung des vorderen Umlenkrades 10 mit Rückstellhemmung bewirkt wird. Die wiederum als Spannkrafterzeuger für beide Keilstücke 24 vorgesehene Schraubenfeder 16 ist hier mit einem. Stahlseil 27 um eine am Keilstück 24 ausgebildete Seilscheibe 28 geführt und dort bei 29 eingehängt, so daß das Keilstück 24 unter dem Einfluß der Spannkraft eine Drehbewegung in Pfeilrichtung d um die Achse 26 ausführen kann, wodurch über die entgegen der Drehrichtung spiralförmig nach außen ansteigende Selbsthemmungs-Keilfläche 25 auch hier die Spannkraft über die Führungsschäfte 12 auf die beiden vorderen Umlenkräder 10 im Wege eines sich selbsttätig regulierenden Vorschubdruckes übertragen wird.

Eina besonders vorteilhafte Ausführungsform ist dann gegeben, wenn die Keilflächen 15, 25 an den Keilstücken 14, 24 hinsichtlich ihrer Längenerstreckung einerseits und die Schraubenfeder 16 hinsichtlich ihrer Spannkraft andererseits so bemessen sind, daß der gesamte konstruktiv bedingte oder mögliche Spannweg für die vorderen Umlenkräder 10, wie er sich z. B. aus dem Freiraum 7 ergibt. von der Spannvorrichtung überbrückt bzw. durchlaufen werden kann. Für einen üblichen Spannweg von etwa 70 mm läßt sich dies durch entsprechende Längenbemessung der Keilflächen 15, 25 und mit zwischen 150 bis 400 kp Spannkraft ausgelegten Schraubenfedern ohne weiteres erreichen. Auf diese Weise kann die Spannvorrichtung automatisch über die gesamte Lebensdauer des Kratzbodens od. dgl. wirksam sein, d. h. es bedarf während der ganzen Lebensdauer des Kratzbodens keinerlei Nachspannens von Hand mehr.

Wenngleich im Vorstehenden der Gegenstand der Erfindung anhand der beiden in der Zeichnung dargestellten Ausführungsbeispiele näher erläutert wurde, wobei das Ausführungsbeispiel nach Fig. 1 bis 3 unter dem Gesichtspunkt einer einfachen Herstellung und Montage als besonders vorteilhaft anzusehen ist, so ist doch ohne weiteres erkennbar, deß im Rahmen der Patentansprüche verschiedene Modifikationen denkbar und möglich sind. So könnte als Spannkrafterzeuger statt der beiden Keilstücken gemeinsamen Schraubenfeder 16 auch eine hydraulische Kolben/Zylinder-Speicherainheit vorgesehen sein. Auch ist es möglich, statt eines gemeinsamen Spannkrafterzeugers für die beiden Keilstücke zwei gesonderte, jedem Keilstück einzeln zugeordnete Spannkrafterzeuger vorzusehen. Statt als Keilstücke könnten die Vorschubdruckorgene z. B, auch von mittels eines Spannkrafterzeugers gegen die Enden der Führungsschäfte drückenden und über Spreizglieder od. dgl. gegen eine Rückstellbewegung gesicherten Klötzen oder Kolben gebildet sein. Es ist auch möglich, die beiden vorderen Umlenkräder 10 auf einer gemeinsamen Umlenkachse vorzusehen und diese dann über den Bügeln 11 mit den Führungsschäften 12 entsprechende Führungsteile in an den Seitenträgern des Fahrzeugrahmens vorgesehenen Führungstaschen gleitverschieblich zu führen und zu haltern, wobei dann die Vorschubdruckorgane im Bereich des Endes der Führungstaschen jeweils ebenfalls seitlich am Fahrgestellrahmen vorzusehen wären, was die Sichtkontrolle über den bereits zurückgelegten bzw. verbrauchten Spannweg erleichtern könnte. Es versteht sich schließlich, daß die erfindungsgemäße Spannvorrichtung nicht etwa nur für Kratzböden o. ä. Transportböden an landwirtschaftlichen Fahrzeugen bestimmt und geeignet ist, sondern mit Vorteil auch bei an sonstigen stationären oder beweglichen landwirtschaftlichen Maschinen und Geräten vorkommenden Kratzböden od. dgl. Transportorganen Anwendung finden kann.

**Patentansprüche**

1. Spannvorrichtung für Kratzböden o. ä. Transportböden an landwirtschaftlichen Fahrzeugen und Maschinen, die mittels eines Spannkrafterzeugers (16) auf die versetzbare(n) Achse(n) (11) der Umlenkräder selbsttätig eine deren stufenlos geradlinige Versatzbewegung weg von der zweiten, ortsfest angeordneten und antreibbaren Umlenkachse bewirkende Spannkraft ausübt, dadurch gekennzeichnet, daß zur Übertragung der, Spannkraft des Spannkrafterzeugers ein gesondertes, die Versatzbewegung bestimmendes Vorschubdruckorgan mit Rückstellhemmung vorgesehen ist.

2. Spannvorrichtung nach Anspruch 1, dadurch gekennzeichnet, daß das Vorschubdruckorgan (14) von dem Spannkrafterzeuger (16) ständig mit Spannkraft beaufschlagt ist.

3. Spannvorrichtung nach Anspruch 1 oder 2, dadurch gekennzeichnet, daß das Vorschubdruckorgan (14) und der Spannkrafterzeuger (16) zur nachstellfreien Überbrückung des Gesamtspannweges der versetzbaren Umlenkräder (10) ausgelegt sind.

4. Spannvorrichtung nach einem der Ansprüche 1 bis 3, dadurch gekennzeichnet, daß das Vorschubdruckorgan (14) zur Rückstellhemmung eine in ihrer Länge dem Gesamtspannweg entsprechende Selbsthemmungs-Keilfläche (15, 25) umfaßt.

5. Spannvorrichtung nach Anspruch 4, dadurch gekennzeichnet, daß die Keilfläche (15, 25) an einem gleitverschieblich oder drehbeweglich gelagerten Keilstück (14), 24 ausgebildet ist.

6. Spannvorrichtung nach einem oder mehreren der Ansprüche 1 bis 5 dadurch gekennzeichnet daß die Umlenkräder (10) oder eine sie tragende gemeinsame Umlenkachse mit Führungsschäften (12) in am vorderen Ende von Längsträgern (6) ausgebildeten Führungstaschen (13) gleitverschieblich gelagert sind und daß jeder Führungstasche eines der in diese eingreifenden, auf das Ende des Führungsschaftes (12) wirkenden Vorschubdruckorgane (z. B. Keilstücke (14, 24)) zugeordnet ist.

7. Spannvorrichtung nach Anspruch 6 mit zwei Führungstaschen und je einem als Keilstück ausgebildeten Vorschubdruckorgan, dadurch gekennzeichnet, daß die Keilstücke (14, 24) in gleicher Horizontalebene und gegensinnig zueinander bewegbar angeordnet und von einem gemeinsamen Spannkrafterzeuger (z. B. Schraubenfeder (16)) beaufschlagt sind.

**Revendications**

1. Dispositif tendeur pour fonds racleurs ou d'autres fonds transporteurs sur des véhicules et des machines agricoles, ce dispositif tendeur exerçant un effort de tension par un générateur d'efforts de tension (16) agissant sur l'axe (les axes) (11) régable (s) des roues de renvoi pour appliquer un effort de tension entraînant automatiquement leur mouvement de déplacement en ligne droite les éloignant du second axe de renvoi susceptible d'être entraîné et disposé à poste fixe, dispositif caractérisé en ce qu'il est prévu, pour la transmission de l'effort de tension du générateur d'efforts de tension, un organe de pression d'avancement particulier avec un blocage en retour pour déterminer le mouvement de déplacement.

2. Dispositif tendeur selon la revendication 1, caractérisé en ce que l'organe de pression d'avancement (14) est constamment sollicité par l'effort de tension du générateur d'efforts de tension (16).

3. Dispositif tendeur selon la revendication 1 ou 2 caractérisé en ce que l'organe depression d'avancement (14) et le générateur d'efforts de tension (16) sont prévus pour couvrir sans réajustement la totalité de la course de mise sous tension des roues de renvo déplaçables (10).

4. Dispositif tendeur selon une des revendications 1 à 3 caractérisé en ce que l'organe pour le bloquage en retour de pression d'avancement (14) comporte une surface en coin auto-bloquante (15, 25) dont la longueur correspond à la totalité de la course de mise sous tension.

5. Dispositif tendeur selon la revendications 4, caractérisé en ce que la surface en coin (15, 25) est ménagée sur une partie en coin (14, 24) montée de façon à pouvoir coulisser ou tourner.

6. Dispositif tendeur selon une ou plusieurs des revendications 1 à 5, caractérisé en ce que les roues de renvoi (10) ou bien un axe de renvoi commun qui les porte, sont montés coulissants avec des fûts de guidage (12) dans des poches de guidage (13) ménagées à l'extrémité antérieure de longerons (6), et qu'à chacune de ces poches de guidage est associé un organe de pression d'avancement (par exemple des pièces en forme de coins 14, 24) pénétrant dans cette poche et agissant sur l'extrémité du fût de guidage (12).

7. Dispositif tendeur selon la revendication 6, avec deux guidages associés chacun à un organe de pression d'avancement constitué par une partie en coin, dispositif caractérisé en ce que les parties en coin (14, 24) sont mobiles en sens inverse l'une par rapport à l'autre dans le même plan horizontal et sont sollicitées par un générateur commun d'efforts de tension (par exemple un ressort hélicoïdal 16).

**Claims**

1. A tensioning device for scraper bottoms or similar conveying bases on agricultural vehicles and machines, which, by means of a tensioning-force producer (16) automatically exerts on the displaceable axle(s) (11) of the guide pulleys (10), a tensioning force causing their continuously variable rectilinear displacement movement away from the second guide axle which is disposed in a fixed position and can be driven, characterised in that a separate progressive pressure member determining the displacement movement and having return restraint is provided to transmit the tensioning force of the tensioning-force producer (16).

2. A tensioning device according to claim 1, characterised in that the progressive pressure member (14) is constantly acted upon with tensioning force by the tensioning-force producer (16).

3. A tensioning device according to claim 1 or 2, characterised in that the progressive pressure member (14) and the tensioning-force producer (16) are designed to cover the whole tensioning travel of the displaceable guide pulleys (10) without readjustment.

4. A tensioning device according to any one of claims 1 to 3, characterised in that, for the return restraint, the progressive pressure member (14) comprises a self-locking wedge surface (15; 25) corresponding in its length to the total tensioning travel.

5. A tensioning device according to claim 4, characterised in that the wedge surface (15; 25) is formed on a wedge member (14; 24) which is mounted for sliding displacement or rotary movement.

6. A tensioning device according to any one or more of claims 1 to 5, characterised in that the guide pulleys (10) or a common guide axle carrying them are mounted for sliding displacement with guide shafts (12) in guide pockets (13) constructed at the front end of longitudinal girders (6) and that associated with each guide pocket is one of the progressive pressure members (for example wedge members [14;24]) which engage in these pockets and act on the end of the guide shaft (12).

7. A tensioning device according to claim 6, having two guide pockets and progressive pressure members each constructed in the form of a wedge member, characterised in that the wedge members (14; 24) are disposed in the same horizontal plane and adapted for movement in opposite directions to one another, and are acted upon by a common tensioning-force producer (for example helical spring [16]).

_Fig.2_

_Fig.1_

Fig.3

Fig.4